# NEUE EUROPÄISCHE PATENTSCHRIFT

(11) **EP 1 637 029 B2**
(45) Veröffentlichungstag und Bekanntmachung des Hinweises auf die Entscheidung über den Einspruch: **05.07.2017**
(45) Hinweis auf die Patenterteilung: 06.10.2010
(21) Anmeldenummer: 05017455.6
(22) Anmeldetag: 11.08.2005
(51) Int. Cl.: A01D 43/063

(54) **Fangkorb für einen Rasenmäher**
Grass collector for a lawn mower
Dispositif de ramassage de gazon pour une tondeuse à gazon

(30) Priorität: 16.09.2004 DE 202004014554 U
(43) Veröffentlichungstag der Anmeldung: 22.03.2006
(73) Patentinhaber: Viking GmbH, 6336 Langkampfen-Kufstein (AT)
(72) Erfinder: Duregger, Georg, 6342 Niederndorf (AT)
(74) Vertreter: Wasmuth, Rolf

(56) Entgegenhaltungen:
- EP-A1- 0 610 062
- DE-A1- 2 811 192
- FR-A- 2 028 712
- GB-A- 1 206 705
- US-A- 3 191 370
- US-A- 3 398 514
- US-A- 3 517 493
- US-A- 3 969 876
- US-A- 4 037 394
- US-A- 4 087 955
- US-A- 4 244 164

## Beschreibung

Die Erfindung betrifft einen Fangkorb für einen fahrbaren Rasenmäher der im Oberbegriff des Schutzanspruches 1 angegebenen Gattung.

Rasenmäher werden üblicherweise mit einem Fangkorb zur Aufnahme des Schnittguts ausgerüstet, welcher an dem Gehäuse des Rasenmähers angebracht wird. Das Schnittgut wird von dem Messer des Rasenmähers in den Fangkorb geschleudert, wobei das Gehäuse luftdurchlässig ausgebildet werden muß, um den beim Schneiden entstehenden Luftstrom durchzulassen und das Schnittgut im Fangkorb zurückzuhalten. Zu diesem Zweck ist bekannt, wenigstens an einer Seite des Korbes eine Vielzahl schmaler Entlüftungsschlitze vorzusehen. Da der Fangkorb zwischen dem Rasenmäher und der den Rasenmäher fahrenden Bedienperson angeordnet ist, wird die der Bedienperson zugewandte Rückwand des Fangkorbs meist nicht mit Entlüftungsschlitzen versehen, um die Bedienperson vor dem mit Schmutzpartikeln beladenen Luftstrom aus dem Behälter zu schützen. Üblicherweise werden daher Entlüftungsschlitze an der Seite des Fangkorbes angeordnet. Zur Bereitstellung des erforderlichen Durchtrittsquerschnitts ist für den Schmutzluftstrom aus dem Fangkorbinneren eine Vielzahl von Entlüftungsschlitzen vorzusehen. Es hat sich gezeigt, daß bei bekannten Fangkörben mit der Vielzahl von Entlüftungsschlitzen und Perforierungen der Gehäusewand die Stabilität des Gehäuses geschwächt ist. Das Gehäuse des Fangkorbes ist dabei nicht mehr starr und gibt nach, was bei der Handhabung des Fangkorbes zumeist als unbequem empfunden wird. Darüber hinaus wird bei den bekannten Fangkörben nicht ausgeschlossen, daß die Bedienperson insbesondere bei höheren Fahrgeschwindigkeiten des Rasenmähers von dem seitlich aus dem Fangkorb austretenden Schmutzluftstrom gestört wird.

Der vorliegenden Erfindung liegt die Aufgabe zugrunde, den gattungsgemäßen Fangkorb derart weiterzubilden, daß eine bequemere Handhabung des Fangkorbes gewährleistet ist und eine Bedienperson des Rasenmähers vor Beeinträchtigung durch den aus dem Fangkorb austretenden Schmutzluftstrom geschützt ist.

Diese Aufgabe wird erfindungsgemäß mit den Merkmalen des Schutzanspruchs 1 gelöst.

Erfindungsgemäß sind an dem Gehäuse des Fangkorbes im Bereich der Entlüftungsschlitze parallel zu den Schlitzen verlaufende Schirmwülste vorgesehen, welche aus der Oberfläche des Gehäuses nach außen hervortreten und so zum einen durch Materialhäufung nach Art einer Rippe die Festigkeit der durch Entlüftungsschlitze perforierten Fangkorbwand erhöhen. Die erfindungsgemäßen Schirmwülste sind dabei von einer Ebene des Gehäuses abgewinkelt in Richtung des jeweils benachbart liegenden Schlitzes ausgebildet, wodurch der aus dem Entlüftungsschlitz austretende Luftstrom aus dem Inneren des Fangkorbes von dem Schirmwulst abgelenkt wird. Darüber hinaus hat die Anordnung der erfindungsgemäßen Schirmwülste den Vorteil, daß die aus der Oberfläche hervorstehenden Schirmwülste die Sicht auf die Entlüftungsschlitze verdecken, wodurch der Fangkorb mit seinem Aussehen den Eindruck einer sehr kompakten Bauweise erweckt.

Zweckmäßig sind die Entlüftungsschlitze im wesentlichen parallel zu einem Boden des Fangkorbes in Reihen angeordnet und pro Schlitzreihe ein Schirmwulst auf einer dem Boden abgewandten Seite der Schlitze vorgesehen, wodurch der Luftstrom aus dem Fangkorb in Richtung der mit dem Rasenmäher bearbeiteten Rasenfläche abgeleitet wird und nicht in den Kopfbereich der den Rasenmäher schiebenden Bedienperson geraten kann. Da der Fangkorb in Bodennähe an dem Rasenmäher angebracht wird, sind die Entlüftungsschlitze bei der Ausbildung der erfindungsgemäßen Schirmwülste oberhalb der Schlitze vollständig unsichtbar. Vorteilhaft schließen sich die Schirmwülste an einen dem Korbboden gegenüberliegenden Abschnitt eines Randes der Entlüftungsschlitze an, wodurch der durch den Entlüftungsschlitz entweichende Luftstrom sofort auf den Schirmwulst trifft und abgelenkt wird. Eine Verbesserung der gezielten Ablenkung des Luftstroms wird erreicht, wenn die Wandung der Entlüftungsschlitze einen in Richtung der Schirmwülste ausgerichteten Kanal bildet, also bei der bevorzugten Ausgestaltung in Richtung des Behälterbodens ausgerichtet ist. In bevorzugter Ausgestaltung bildet die Wandung eines Entlüftungsschlitzes mit dem benachbart liegenden Schirmwulst eine durchgehende Fläche, wodurch ein langer Strömungsweg mit einfachen Mitteln gebildet wird, an dem der abzulenkende Luftstrom stabilisiert wird.

Durch die nahe Anordnung der Schirmwülste neben den Entlüftungsschlitzen kann eine stabile Formgebung des Wulstquerschnittes erfolgen, wobei der Schirmwulst bei hoher Formfestigkeit mit seinem freiliegenden Ende in Überdeckung mit dem offenen Lüftungsschlitz reichen kann. Dadurch wird der vom Schirmwulst abgedeckte Sektor erhöht, in welchem der Schlitz unsichtbar ist.

Die Schirmwülste werden einteilig an dem Gehäuse ausgebildet, wodurch eine kostengünstige Herstellung des Gehäuses beispielsweise als Spritzgußteil oder durch Kunststoffextrusion möglich ist.

Ein Ausführungsbeispiel der Erfindung ist nachstehend anhand der Zeichnung näher erläutert. Es zeigen:
- Fig. 1: eine Ansicht eines fahrbaren Rasenmähers mit Fangkorb,
- Fig. 2: einen Querschnitt durch einen erfindungsgemäßen Fangkorb,
- Fig. 3: eine Vergrößerung der Fangkorbwand gemäß Ausschnitt III in Fig. 2.

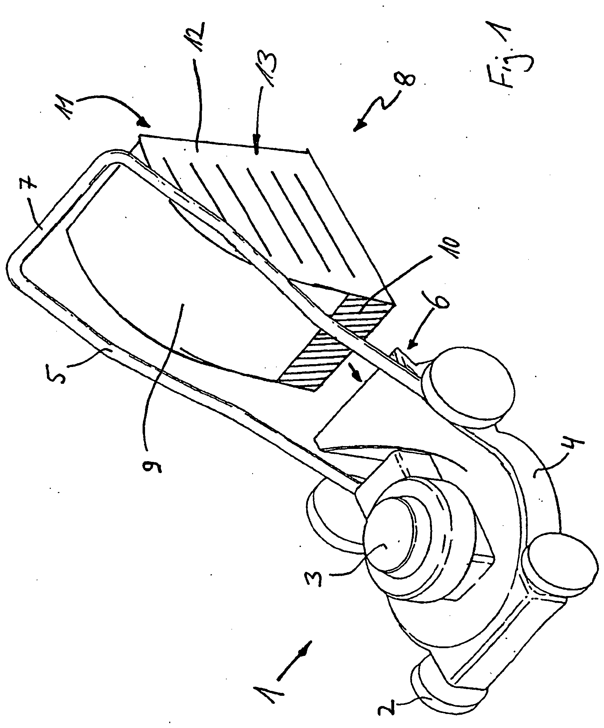

Fig. 1 zeigt einen Rasenmäher 1, der mit Rädern 2 über eine zu bearbeitende Bodenfläche fahrbar ist. Der Rasenmäher 1 umfaßt in bekannter Bauart einen Motor 3, welcher ein Schneidmesser antreibt, das in einem zum Boden des Rasenmähers 1 offenen Gehäuse 4 umläuft und den unter dem Rasenmäher 1 befindlichen Bodenbewuchs beschneidet. Der Rasenmäher 1 weist einen etwa U-förmigen Lenkbügel 5 auf, dessen Bügelschenkel an dem Gehäuse 4 des Rasenmähers 1 etwa im Bereich der hinteren Räder 2 befestigt ist. Der zwischen den Schenkeln des Lenkbügels 5 quer verlaufende Teil ist als Handgriff 7 für eine Bedienperson ausgebildet. Der Lenkbügel 5 ist dabei schräg gerichtet an dem Gehäuse 4 des Rasenmähers 1 befestigt, wodurch der Handgriff 7 in einem in Bewegungsrichtung hinter dem Rasenmäher 1 liegenden Bereich angeordnet ist. Zur Bedienung des Rasenmähers 1 umschließt die Bedienperson den Handgriff 7 mit den Händen und kann bequem hinter dem Rasenmäher 1 gehen.

Das vom Messer im Rasenmäher 1 abgetrennte Schnittgut wird durch einen Auswurf 6 am hinteren Ende des Rasenmähers aus dem Gehäuse 4 abgegeben. Zur Aufnahme des Schnittguts ist ein Fangkorb 8 vorgesehen, welcher hinter dem Rasenmäher in dem unter dem Lenkbügel 5 verbleibenden Raum liegend an dem Mähergehäuse 4 anbringbar ist. Der Fangkorb 8 weist eine Anschlußöffnung 10 in seinem Gehäuse auf, welche in Einbaulage des Fangkorbes mit dem Auswurf 6 des Mähergehäuses 4 in Verbindung steht, wodurch das Schnittgut in den Fangkorb 8 gelangt. Der Fangkorb 8 weist in seinem Gehäuse eine Vielzahl von Entlüftungsschlitzen 13 auf, durch die der vom Rasenmäher 1 erzeugte Luftstrom entweichen kann, wobei die Entlüftungsschlitze 13 derart dimensioniert werden, daß die Schnittgutfracht des Luftstroms im Gehäuse 9 des Fangkorbs 8 zurückgehalten werden. Eine in Fahrtrichtung des Rasenmähers 1 hinten liegende Rückseite 11 des Fangkorbes 8 ist geschlossen ausgebildet, und die Entlüftungsschlitze 13 sind in den parallel zur Fahrtrichtung des Rasenmähers 1 liegenden Seitenflächen 12 des Gehäuses 8 angeordnet, wodurch sichergestellt ist, daß der Luftstrom seitlich aus dem Fangkorb 8 austritt. Die häufig Schmutzpartikel enthaltende Luft aus dem Grasfangkorb wird dadurch aus dem Bereich hinter dem Fangkorb 8 ferngehalten, in dem die Bedienperson des Rasenmähers läuft.

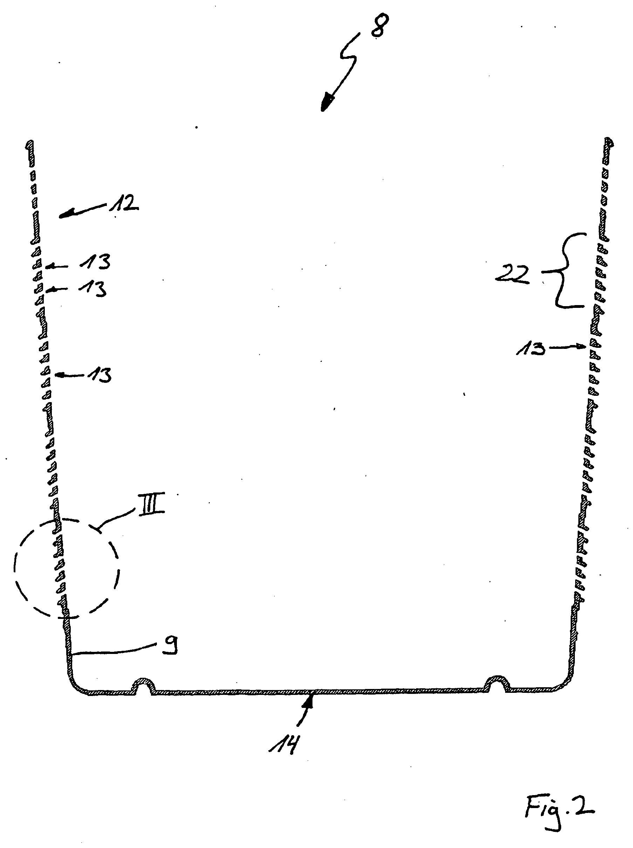

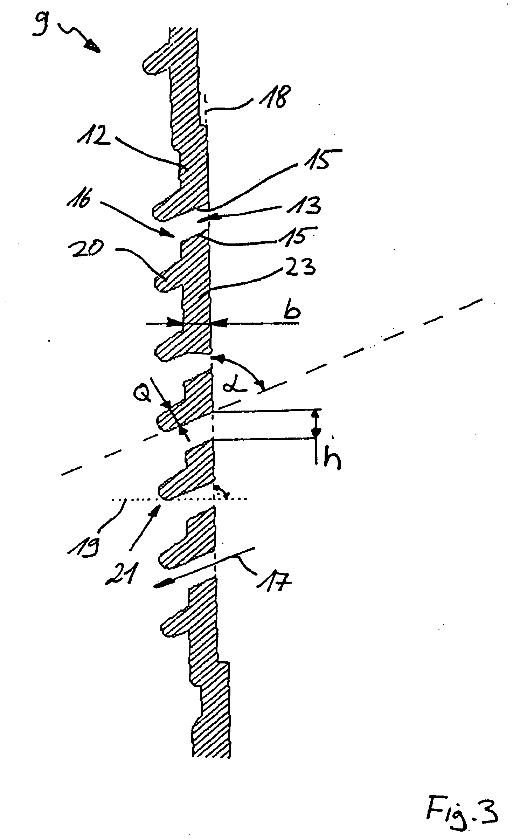

Die Ausbildung des Fangkorbes ist nachstehend anhand der Fig. 2 und 3 näher erläutert, wobei Fig. 2 einen Querschnitt durch das Gehäuse 9 des Fangkorbs 8 ist mit in den Seitenflächen 12 des Gehäuses 9 liegender Schnittebene.

Fig. 3 zeigt eine Vergrößerung der Seitenwand 12 gemäß III in Fig. 2. In den Seitenwänden 12 des Gehäuses 9 des Fangkorbs 8 ist eine Vielzahl von Entlüftungsschlitzen angeordnet, welche parallel zum Boden 14 des Fangkorbs 8 in Reihen angeordnet sind. Im vorliegenden Ausführungsbeispiel sind jeweils mehrere parallele Reihen von Entlüftungsschlitzen 13 nahe beieinander liegend angeordnet und die so gebildeten Schlitzgruppen 22 mit Abständen am Gehäuse vorgesehen. Dadurch ergeben sich zwischen den Schlitzgruppen 22 Abschnitte mit durchgehender Gehäusewand, was für die Festigkeit des Gehäuses vorteilhaft ist.

Erfindungsgemäß sind an der Oberfläche der Seitenwand 12 nach außen hervortretende und parallel zu den Schlitzen 13 verlaufende Schirmwülste 20 vorgesehen. Die Schirmwülste 20 sind dabei auf der dem Boden 14 des Fangkorbs 8 gegenüberliegenden Seite der jeweiligen Entlüftungsschlitze 13 angeordnet und abgewinkelt in Richtung der jeweiligen Entlüftungsschlitze ausgebildet, also zum Boden 14 gerichtet. Dadurch ist jedem Entlüftungsschlitz ein Schirm zugeordnet, an dem der durch den Schlitz austretende Schmutzluftstrom in Richtung des Bodens abgelenkt wird. Die Schirmwülste schließen sich an den bezüglich des Bodens 14 oben liegenden Rand 16 der Entlüftungsschlitze 13 an und zwingen den Luftstrom abwärts in Richtung der zu bearbeitenden Rasenfläche, so daß die Schmutzluft aus dem die Bedienungsperson beeinträchtigenden Bereich ferngehalten wird. Um die Ablenkung des Schmutzluftstroms aus dem Behälterinneren weiter zu verbessern, bildet die Wandung 15 der Entlüftungsschlitze 13 einen zum Boden gerichteten Strömungskanal. Dabei bildet die oben liegende Wandung 15 mit dem jeweils zugeordneten Schirmwulst 20 eine ebene Prallfläche für den Luftstrom.

Die Anordnung der Schirmwülste am oberen Rand 16 der Entlüftungsschlitze 13 und die Neigung der Schirmwülste gegenüber der Ebene 18 der Gehäusewand 9 bewirkt, daß Schirmwülste mit ihrem freien Ende die Öffnung der Entlüftungsschlitze 13 wenigstens teilweise überdecken, wie durch die Projektionsgerade 19 gegenüber der Ebene 18 verdeutlicht ist. Die Schirmwülste 20 an der Oberfläche der Seitenwand wirken als Rippen und erhöhen die Festigkeit des Gehäuses. Durch das wenigstens teilweise Verdecken der Entlüftungsschlitze 13 durch die geneigten Schirmwülste wird aber auch der Eindruck eines festen Gehäuses weiter verstärkt, da die den Eindruck verminderter Festigkeit hervorrufenden Entlüftungsschlitze kaum bzw. nicht sichtbar sind. Die Schirmwülste werden vorteilhaft einteilig mit der Seitenwand 9 hergestellt und stehen etwa um das gleiche Maß aus der Seitenwand 12 hervor, wie die Wandstärke b des Gehäuses. Durch die Verstärkungswirkung der vorteilhaft durchgängig an der Seitenwand ausgebildeten Schirmwülste 20 kann die Wandstärke b der Gehäusewand geringer ausgeführt werden als bisher erforderlich war, ohne daß eine als unangenehm empfundene Eindrückbarkeit der Seitenwand entsteht. Der Querschnitt Q der Schirmwülste 20 entspricht dabei vorteilhaft etwa der Höhe h der Entlüftungsschlitze. Der gewünschte Effekt der Abdeckung der Entlüftungsschlitze 13 durch die geneigten Schirmwülste 20 bei gleichzeitig zufriedenstellendem Lenkeffekt der Schlitzkanäle 17 entsprechend der Neigung der Schirmwülste 20 entsteht bei Neigungswinkeln α der Schirmwülste 20 in einem Sektor von etwa 20° bis 80°, wobei sich die optimale Abstimmung zwischen Sichtschutz und Ablenkwirkung durch Schirmwülste mit einem Neigungswinkel α in einem Korridor von 60° bis 70° ergibt.

Im vorliegenden Ausführungsbeispiel sind zusätzlich zu den an den Entlüftungsschlitzen vorgesehenen Schirmwülsten weitere Schirmwülste 20 in den Abschnitten 23 der Seitenwand 12 vorgesehen, die zwischen den Schlitzgruppen 22 im Gehäuse vorgesehen sind. Dabei wird unterhalb der jeweils dem Boden am nächsten liegenden Schlitzreihe einer Gruppe 22 mehrerer Schlitzreihen ein weiterer durchgehender Schirmwulst zugeordnet, welcher mit dem gleichen Neigungswinkel α wie die anderen Schirmwülste 20 ausgebildet wird und für ein harmonisches Aussehen der durch Schirmwülste abgedeckten Schlitzgruppe sorgt.

## Patentansprüche

1. Fangkorb für einen fahrbaren Rasenmäher,
welcher zur Aufnahme von Schnittgut an einem Gehäuse (4) des Rasenmähers (1) anbringbar ist,
wobei ein Gehäuse (9) des Fangkorbes (8) wenigstens an einer Seite (12) des Fangkorbes (8) eine Vielzahl von Entlüftungsschlitzen (13) aufweist, derart, dass ein Luftstrom seitlich aus dem Fangkorb (8) austritt,
**dadurch gekennzeichnet,**
**dass** an der Oberfläche des Gehäuses (9) im Bereich der Entlüftungsschlitze (13) nach außen hervortretende
und parallel zu den Schlitzen (13) verlaufende Schirmwülste (20) vorgesehen sind, welche von einer Ebene (18) des Gehäuses (9) abgewinkelt in Richtung des jeweils benachbart liegenden Schlitzes (13) ausgebildet sind,
und **dass** die Schirmwülste (20) durch Materialhäufung nach Art einer Rippe einteilig an dem Gehäuse (9) ausgebildet sind.

2. Fangkorb nach Anspruch 1,
**dadurch gekennzeichnet, daß** die Entlüftungsschlitze (13) im wesentlichen parallel zu einem Boden (14) des Fangkorbes (8) in Reihen angeordnet sind und pro Schlitzreihe ein Schirmwulst (20) auf einer dem Boden (14) abgewandten Seite der Schlitze (13) vorgesehen ist, wobei die Schirmwülste (20) in Richtung des Bodens (14) abgewinkelt ausgebildet sind.

3. Fangkorb nach Anspruch 1 oder 2,
**dadurch gekennzeichnet, daß** die Schirmwülste (20) sich jeweils an einen dem Korbboden (14) gegenüberliegenden Abschnitt eines Randes (16) der Schlitze (13) anschließen.

4. Fangkorb nach Anspruch 1, 2 oder 3,
**dadurch gekennzeichnet, daß** jeder Entlüftungsschlitz (13) wenigstens teilweise von einem Schirmwulst (20) mit dessen frei liegenden Ende (21) überdeckt wird.

5. Fangkorb nach einem der Ansprüche 1 bis 4,
**dadurch gekennzeichnet, daß** eine Wandung (15) der Entlüftungsschlitze (13) einen in Richtung der Schirmwülste (20) ausgerichteten Kanal (17) ausbildet.

6. Fangkorb nach Anspruch 5,
**dadurch gekennzeichnet, daß** der Schirmwulst (20) mit der Wandung (15) des Entlüftungsschlitzes (13) eine Fläche bildet.

7. Fangkorb nach einem der Ansprüche 1 bis 6,
**dadurch gekennzeichnet, daß** die Schirmwülste (20) etwa um das gleiche Maß aus der Ebene (18) des Gehäuses (9) hervorstehen wie dessen Wandstärke (b).

8. Fangkorb nach einem der Ansprüche 1 bis 7,
**dadurch gekennzeichnet, daß** ein Neigungswinkel (α) der Schirmwülste (20) gegenüber der Ebene (18) des Gehäuses (9) zwischen 20° und 80°, vorzugsweise 60° bis 70° beträgt.

9. Fangkorb nach einem der Ansprüche 1 bis 8,
**dadurch gekennzeichnet, dass** die Schirmwülste (20) durchgängig ausgebildet sind.

10. Fangkorb nach einem der Ansprüche 1 bis 9,
**dadurch gekennzeichnet, dass** ein Querschnitt (Q) der Schirmwülste (20) etwa das gleiche Maß aufweist wie die Höhe (h) der Entlüftungsschlitze (13).

## Claims

1. Grass collector for a wheeled lawnmower, which can be attached to a housing (4) of the lawnmower (1) to collect cuttings, wherein a housing (9) of the grass collector (8) has a plurality of venting slots (13) on at least one side (12) of the grass collector (8), so than an airflow emerges laterally from the grass collector (8),
**characterised in that** screening bosses (20) projecting outwards and extending parallel to the slots (13) are provided on the surface of the housing (9) in the region of the venting slots (13), said bosses being designed to extend at an angle from a plane (18) of the housing (9) towards the adjacent slot (13), and **in that** the screening bosses (20) are integrally formed on the housing (9) in the manner of a rib by material accumulation.

2. Grass collector according to claim 1,
**characterised in that** the venting slots (13) are arranged in rows substantially parallel to a base (14) of the grass collector (8), and **in that** for each row of slots one screening boss (20) is provided on a side of the slots (13) which is remote from the base (14), the screening bosses (20) being angled towards the base (14).

3. Grass collector according to claim 1 or 2,
**characterised in that** each of the screening bosses (20) adjoins a section of an edge (16) of the slots (13) which is opposite the collector base (14).

4. Grass collector according to claim 1, 2 or 3,
**characterised in that** each venting slot (13) is at least partially covered by a screening boss (20) with its exposed end (21).

5. Grass collector according to any of claims 1 to 4,
**characterised in that** a wall (15) of the venting slots (13) forms a passage (17) oriented in the direction of the screening bosses (20).

6. Grass collector according to claim 5,
**characterised in that** the screening boss (20) forms a surface with the wall (15) of the venting slot (13).

7. Grass collector according to any of claims 1 to 6,
**characterised in that** the venting slots (13) project from the plane (18) of the housing (9) by approximately the same amount as the wall thickness (b) thereof.

8. Grass collector according to any of claims 1 to 7,
**characterised in that** an angle of inclination (α) of the screening bosses (20) relative to the plane (18) of the housing (9) is 20° to 80°, preferably 60° to 70°.

9. Grass collector according to any of claims 1 to 8,
**characterised in that** the screening bosses (20) are designed to be continuous.

10. Grass collector according to any of claims 1 to 9,
**characterised in that** a cross-section (Q) of the screening bosses (20) has approximately the same dimension as the height (h) of the venting slots (13).

## Revendications

1. Panier de ramassage pour une tondeuse à gazon roulante, qui est apte à être installé sur un carter (4) de la tondeuse (1) en vue de recueillir le produit coupé, un carter (9) du panier de ramassage (8) présentant au moins sur un côté (12) du panier (8) plusieurs fentes d'évacuation d'air (13), de sorte qu'un courant d'air sort dudit panier (8) sur le côté,
**caractérisé en ce qu'**il est prévu sur la surface du carter (9), dans la zone des fentes d'évacuation d'air (13), des renflements de protection (20) qui dépassent vers l'extérieur qui sont parallèles auxdites fentes (13) et qui forment par rapport à un plan (18) du carter (9) un angle en direction de la fente (13) voisine, et **en ce que** les renflements de protection (20) sont formés d'une seule pièce sur le carter (9) par une accumulation de matière, à la manière d'une nervure.

2. Panier de ramassage selon la revendication 1,
**caractérisé en ce que** les fentes d'évacuation d'air (13) sont disposées par séries et sont globalement parallèles à un fond (14) du panier de ramassage (8), et il est prévu pour chaque série de fentes un renflement de protection (20) sur un côté des fentes (13) opposé au fond (14), les renflements de protection (20) formant un angle en direction du fond (14).

3. Panier de ramassage selon la revendication 1 ou 2,
**caractérisé en ce que** chaque renflement de protection (20) fait suite à une partie d'un bord (16) de la fente (13) qui est opposée au fond (14) du panier.

4. Panier de ramassage selon la revendication 1, 2 ou 3,
**caractérisé en ce que** chaque fente d'évacuation d'air (13) est couverte au moins en partie par un renflement de protection (20), avec l'extrémité libre (21) de celui-ci.

5. Panier de ramassage selon l'une des revendications 1 à 4,
**caractérisé en ce qu'**une paroi (15) des fentes d'évacuation d'air (13) forme un canal (17) dirigé vers les renflements de protection (20).

6. Panier de ramassage selon la revendication 5,
**caractérisé en ce que** le renflement de protection (20) forme une surface avec la paroi (15) de la fente d'évacuation d'air (13).

7. Panier de ramassage selon l'une des revendications 1 à 6,
**caractérisé en ce que** les renflements de protection (20) dépassent du plan (18) du carter (9) sur une distance à peu près égale à l'épaisseur de paroi (b) dudit carter (9).

8. Panier de ramassage selon l'une des revendications 1 à 7,
**caractérisé en ce qu'**un angle d'inclinaison (α) des renflements de protection (20) par rapport au plan (18) du carter (9) est situé entre 20° et 80°, et est de préférence de 60° à 70°.

9. Panier de ramassage selon l'une des revendications 1 à 8,
**caractérisé en ce que** les renflements de protection (20) ont une forme constante.

10. Panier de ramassage selon l'une des revendications 1 à 9,
**caractérisé en ce qu'**une section transversale (Q) des renflements de protection (20) présente à peu près la même valeur que la hauteur (h) des fentes d'évacuation d'air (13).
